# EUROPEAN PATENT SPECIFICATION

(11) **EP 2 650 412 B1**
(45) Date of publication and mention of the grant of the patent: **10.06.2015**
(21) Application number: 11847776.9
(22) Date of filing: 27.04.2011
(51) Int. Cl.: D01D 5/00, D01D 4/00, D01D 4/06, D01D 13/00, B82Y 40/00, D01D 1/10, D01F 13/00

(54) **METHOD AND DEVICE FOR MANUFACTURING NANOFIBER**
VERFAHREN UND VORRICHTUNG ZUR HERSTELLUNG VON NANOFASERN
PROCÉDÉ ET DISPOSITIF DE FABRICATION DE NANOFIBRES

(30) Priority: 06.12.2010 JP 2010272074; 24.02.2011 KR 20110016681
(43) Date of publication of application: 16.10.2013
(73) Proprietor: Toptec Co., Ltd., Gumi-si, Gyeonsangbuk-do 730-853 (KR); Shinshu University, Matsumoto-shi, Nagano 390-8621 (JP)
(72) Inventor: LEE, Jae Hwan, Gumi-si Gyeongsangbuk-do 730-853 (KR); KIM, Ick Soo, Ueda-shi Nagano 386-8567 (JP)
(74) Representative: Stolmár & Partner Patentanwälte PartG mbB
(86) International application number: PCT/KR2011/003059
(87) International publication number: WO 2012/077868

(56) References cited:
- EP-A2- 1 975 284
- CN-A- 101 298 724
- JP-A- 2008 285 792
- KR-A- 20030 077 384
- KR-A- 20040 052 685
- KR-B1- 100 578 764
- KR-B1- 100 743 502
- US-A1- 2008 233 284

## Description

### [Technical Field]

The present invention relates to an apparatus and a method for manufacturing nano-fibers. In the present invention, "nano-fiber" means a fiber which is several nanometers to thousands of nanometers in average diameter and is made of a polymer material. Moreover, a "polymer solution" means a solution that polymer is dissolved in a solvent.

### [Background Art]

A nano-fiber manufacturing apparatus capable of collecting a polymer solution overflowed from outlets of a plurality of upward nozzles and reusing the collected polymer solutions as raw materials for nano-fibers has been disclosed (See Japanese Patent Publication No. 4402695). FIG. 6 is a view for showing a conventional nano-fiber manufacturing apparatus 900.

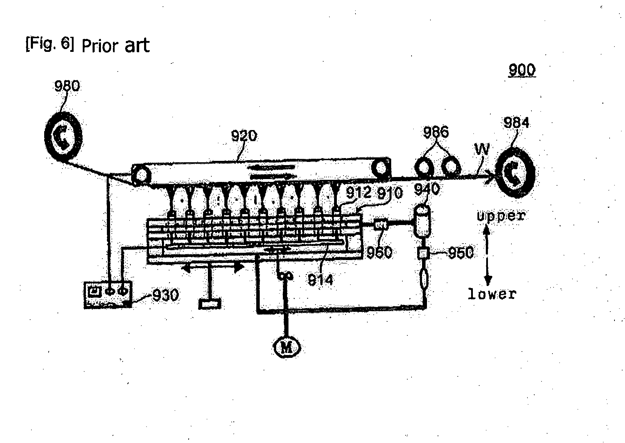

As shown in FIG. 6, the conventional nano-fiber manufacturing apparatus 900 includes: a nozzle block 910 having a plurality of upward nozzles 912 for upwardly discharging the polymer solution from outlets of the upward nozzles 912 and a polymer solution supply channel 914 for supplying the polymer solution to the corresponding plural upward nozzles 912; a power supply 930 for applying high voltage between the nozzle block 910 and a collector 920; a tank 940 for storing the polymer solution which is a raw material of nano-fiber; a measuring pump 950 for supplying the polymer solution stored in the tank 940 to the polymer solution supply channel 914 of the nozzle block 910; and a collection pump 960 for collecting the polymer solution overflowed from the outlets of the plural upward nozzles 912 and returning to the tank 940.

Because the conventional nano-fiber manufacturing apparatus 900 discharges the polymer solution from the outlets of the plural upward nozzles 912 and field-emits nano-fibers, it does not cause the droplet phenomenon of conventional nano-fiber manufacturing apparatuses using downward nozzles (droplet phenomenon means that a mass of polymer solution which is not emitted from the downward nozzles is attached to a long sheet as it is), and can manufacture nano-fibers of high quality.

Moreover, because the conventional nano-fiber manufacturing apparatus 900 field-emits nano-fibers while overflowing the polymer solution from the outlets of the plural upward nozzles 912, it can always supply a sufficient amount of the polymer solution to the upward nozzles and manufacture nano-fibers of uniform quality.

Furthermore, because the conventional nano-fiber manufacturing apparatus 900 collects the polymer solution overflowed from the outlets of the plural upward nozzles 912 and reuses the overflowed polymer solution as a raw material of the nano-fibers, the nano-fiber manufacturing apparatus 900 can reduce costs of materials, and hence, can manufacture nano-fibers at a low price. Additionally, it follows the resource saving flow.

### [Disclosure]

### [Technical Problem]

However, in connection with the conventional nano-fiber manufacturing apparatus, according to study results by the inventor of the present invention, it was confirmed that it was actually difficult to mass-produce nano-fibers with uniform quality. That is, because the conventional nano-fiber manufacturing apparatus has the structure to directly return the collected polymer solution to the tank, composition of the collected polymer solution is changed from the original polymer solution due to volatilization of the solvent during the collecting process. As the result, the conventional nano-fiber manufacturing apparatus cannot uniformly keep the emission conditions (in this case, the composition of the polymer solution) for a long time during the field emission process, and it is difficult to mass-produce nano-fibers with uniform quality.

Therefore, the present invention has been made in an effort to solve the above-mentioned problems occurring in the prior arts, and it is an object of the present invention to provide an apparatus and a method for manufacturing nano-fibers, which can mass-produce nano-fibers with uniform quality at a low manufacturing cost.

### [Technical Solution]

To achieve the above objects, the present invention provides a nano-fiber manufacturing apparatus, which includes: a nozzle block having a plurality of upward nozzles for upwardly discharging a polymer solution from outlets of the upward nozzles and a polymer solution supply channel for supplying the polymer solution to the upward nozzles; a collector arranged above the nozzle block; and a power supply for applying high voltage between the upward nozzles and the collector, and which is capable of field-emitting nano-fibers by discharging the polymer solution from the outlets of the plural upward nozzles while overflowing the polymer solution from the outlets of the plural upward nozzles, and at the same time, collecting the polymer solution overflowed from the outlets of the upward nozzles so as to the collected polymer solution as a raw material of nano-fibers, the nano-fiber manufacturing apparatus including: a polymer solution collecting channel formed in the nozzle block for collecting the polymer solution overflowed from the outlets of the upward nozzles; a raw material tank for storing the polymer solution which becomes the raw material of the nano-fibers; regeneration tanks adapted for regenerating the collected polymer solution and for storing the regenerated polymer solution; a middle tank for storing the polymer solution supplied from the raw material tank or the regeneration tank; a first transfer device for transferring the polymer solution from the polymer solution collecting channel of the nozzle block to the regeneration tank; a first transfer controller for controlling a transfer operation of the first transfer device; a second transfer device for transferring the polymer solution from the raw material tank and the regeneration tank to the middle tank; and a second transfer controller for controlling a transfer operation of the second transfer device.

Moreover, the transfer device includes a pipe for passing the polymer solution and a pump for transferring the polymer solution. Furthermore, the transfer control device includes a valve for controlling the passage and a passing amount of the polymer solution and a controller for controlling operations of the corresponding valve or the pump.

It is preferable that the second transfer controlling device controls that the polymer solution is transferred from which one of the raw material tank and the regeneration tank to the middle tank.

Furthermore, "one of the raw material tank and the regeneration tank" may be one of the raw material tank and the regeneration tank and may be all of the raw material tank and the regeneration tank.

The nano-fiber manufacturing apparatus includes a plurality of regeneration tanks. It is preferable that the first transfer controller controls that the polymer solution is transferred from which one of the regeneration tanks to the middle tank, and in the case that the polymer solution is transferred from the regeneration tank to the middle tank, the second transfer controller controls that the polymer solution is transferred from which one of the regeneration tanks to the middle tank.

In the nano-fiber manufacturing apparatus according to the present invention, the middle tank includes: a partition wall for covering a portion where the polymer solution is supplied; a bubble removal filter arranged at the bottom of the partition wall; a first storage part for storing the polymer solution before bubbles are removed by the bubble removal filter; and a second storage part for storing the polymer solution after the bubbles are removed by the bubble removal filter, and wherein the polymer solution stored in the second storage part is supplied to the polymer solution supply channel of the nozzle block.

In the nano-fiber manufacturing apparatus according to the present invention, the middle tank includes a first sensor for measuring a surface height of the polymer solution in the second storage part, and the second transfer controller controls a transfer operation of the second transfer device according to the surface height measured by the first sensor.

In the nano-fiber manufacturing apparatus according to the present invention, the nozzle block comprises a second sensor for measuring a surface height of the polymer solution in the polymer solution collecting channel, and the first transfer controller controls a transfer operation of the first transfer device according to the surface height measured by the second sensor.

In the nano-fiber manufacturing apparatus according to the present invention, the polymer solution collecting channel includes: a receiving portion for receiving the polymer solution overflowed from the outlets of the upward nozzles; a cover covering the receiving portion and having a plurality of nozzle holes respectively communicating with the upward nozzles; and a plurality of jackets for covering sides of the upward nozzles protruding from the nozzle holes.

In the nano-fiber manufacturing apparatus according to the present invention, it is preferable that the bottom of the middle tank is located above the top of the upward nozzles.

In the nano-fiber manufacturing apparatus according to the present invention, it is preferable that a measuring pump is arranged between the middle tank and the nozzle block for supplying the polymer solution stored in the middle tank to the polymer solution supply channel of the nozzle block.

In the nano-fiber manufacturing apparatus according to the present invention, it is preferable that the field emission device further comprises another transfer device for transferring a long sheet, and essentially comprises the nozzle block and the collector in order to laminate nano-fibers on the surface of the long sheet, and wherein a plurality of the field emission devices are arranged in series in a transfer direction of the long sheet.

In another aspect of the present invention, the present invention provides a nano-fiber manufacturing method, which includes the steps of field-emitting nano-fibers by discharging a polymer solution from outlets of plural upward nozzles while overflowing the polymer solution from the outlets of the plural upward nozzles, and collecting the polymer solution overflowed from the outlets of the upward nozzles so as to reuse the collected polymer solution as the raw material of nano-fibers, the nano-fiber manufacturing method including the steps of: collecting the polymer solution overflowed from the outlets of the plural upward nozzles to a regeneration tank; measuring the content of a solvent in the collected polymer solution; adding the solvent of a necessary amount into the polymer solution on the basis of the measured result, so that the polymer solution can be reused as a raw material of nano-fibers.

### [Advantageous Effects]

The nano-fiber manufacturing apparatus according to the present invention, like the conventional nano-fiber manufacturing apparatus, discharges the polymer solution from the outlets of the plural upward nozzles and field-emits nano-fibers, and hence, it does not cause the droplet phenomenon of the conventional nano-fiber manufacturing apparatuses using downward nozzles and can manufacture nano-fibers of high quality.

Moreover, the nano-fiber manufacturing apparatus according to the present invention, like the conventional nano-fiber manufacturing apparatus, field-emits nano-fibers while overflowing the polymer solution from the outlets of the plural upward nozzles, and hence, can always supply a sufficient amount of the polymer solution to the upward nozzles and manufacture nano-fibers of uniform quality.

Furthermore, the nano-fiber manufacturing apparatus according to the present invention, like the conventional nano-fiber manufacturing apparatus, collects the polymer solution overflowed from the outlets of the plural upward nozzles and reuses the overflowed polymer solution as a raw material of the nano-fibers, and hence, it can reduce costs of materials so as to manufacture nano-fibers at a low price. Additionally, it follows the resource saving flow.

Additionally, the nano-fiber manufacturing apparatus according to the present invention transfers the collected polymer solution to the regeneration tank, measures the composition of the corresponding polymer solution, and adds necessary ingredients besides the solution to the polymer solution according to the measured results, so that the nano-fiber manufacturing apparatus can regenerate the corresponding polymer solution into a polymer solution which has the same composition as the original polymer solution or which is very similar in composition to the original polymer solution. Therefore, the nano-fiber manufacturing apparatus according to the present invention can collect and reuse the overflowed polymer solution as a raw material of nano-fibers, uniformly keep the emission conditions (in this case, the composition of the polymer solution) for a long time during the field emission process, and mass-produce nano-fibers with uniform quality.

As a result, the nano-fiber manufacturing apparatus according to the present invention can mass-produce nano-fibers with uniform quality at a low manufacturing cost.

The nano-fiber manufacturing apparatus according to the present invention transfers the polymer solution from the raw material tank to the middle tank when the regenerated polymer solution is not stored in the regeneration tank or is not sufficiently stored in the regeneration tank, and transfers the polymer solution from the regeneration tank to the middle tank when the regenerated polymer solution is sufficiently stored in the regeneration tank, so as to properly control a supply source of the polymer solution transferred to the middle tank according to the amount of the polymer solution stored in the regeneration tank.

The nano-fiber manufacturing apparatus according to the present invention can use a plurality of the regeneration tanks in order (by turns) so as to carry out regeneration of the collected polymer solution without a stop.

The nano-fiber manufacturing apparatus according to the present invention can manufacture nano-fibers of more uniform quality because the polymer solution from which bubbles are removed by the bubble removal filter is always supplied to the upward nozzles.

The nano-fiber manufacturing apparatus according to the present invention can always supply the polymer solution to the upward nozzles at a predetermined pressure in stability without regard to the amount of the polymer solution stored in the raw material tank and the regeneration tank.

The nano-fiber manufacturing apparatus according to the present invention can effectively transfer the polymer solution to the regeneration tank because it can transfer the corresponding polymer solution to the regeneration tank at the place where the polymer solution is collected in the polymer solution collecting channel to some degree.

The nano-fiber manufacturing apparatus according to the present invention can prevent scattering of the overflowed polymer solution and effectively collect the corresponding polymer solution by the operation of jackets. Moreover, the nano-fiber manufacturing apparatus can prevent volatilization of the solvent from the polymer solution by the operation of a cover.

The nano-fiber manufacturing apparatus according to the present invention can stably supply the polymer solution to the upward nozzles using gravity.

The nano-fiber manufacturing apparatus according to the present invention can stably supply the polymer solution to the upward nozzles at a wanted pressure using the measuring pump.

The nano-fiber manufacturing apparatus according to the present invention can mass-produce nano-fibers with higher productivity. Furthermore, the nano-fiber manufacturing apparatus can mass-produce products which are formed by laminating the nano-fibers thick or which are formed by laminating nano-fibers of various kinds.

The nano-fiber manufacturing method according to the present invention, like the nano-fiber manufacturing apparatus, can mass-produce nano-fibers with uniform quality at a low manufacturing cost.

Additionally, the nano-fiber manufacturing method according to the present invention may include the steps of measuring the content of the solvent and materials (for instance, polymer, additives, etc.) in the collected polymer solution and adding the solvent and the materials (for instance, polymer, additives, etc.) according to the measured result.

The field emission device or the nano-fiber manufacturing apparatus according to the present invention can manufacture nano-fibers which are widely usable for medical supplies of high-functional and high-sensitive textiles, beauty care supplies such as health care and skin care products, industrial materials such as wiping clothes and filters, electronic and mechanical materials such as separators of secondary cells, separators of condensers, carriers of various catalysts, and various sensor materials, medical materials such as reclaimed medical materials, biomedical materials, medical MEMS materials, and bio-sensor materials, and other materials.

### [Description of Drawings]

FIG. 1 is a front view of a nano-fiber manufacturing apparatus according to a first preferred embodiment of the present invention.
FIG. 2 is a front view of a field emission device according to the first preferred embodiment of the present invention.
FIG. 3 is a view showing a nozzle block according to the first preferred embodiment of the present invention.
FIG. 4 is a front view of a field emission device according to a second preferred embodiment of the present invention.
FIG. 5 is a front view of a nano-fiber manufacturing apparatus according to a third preferred embodiment of the present invention.
FIG. 6 is a front view of a nano-fiber manufacturing apparatus according to a prior art.

### [Mode for Invention]

Hereinafter, apparatus and method for manufacturing nano-fibers according to the present invention will be described in more detail based on the embodiments.

### [Embodiment 1]

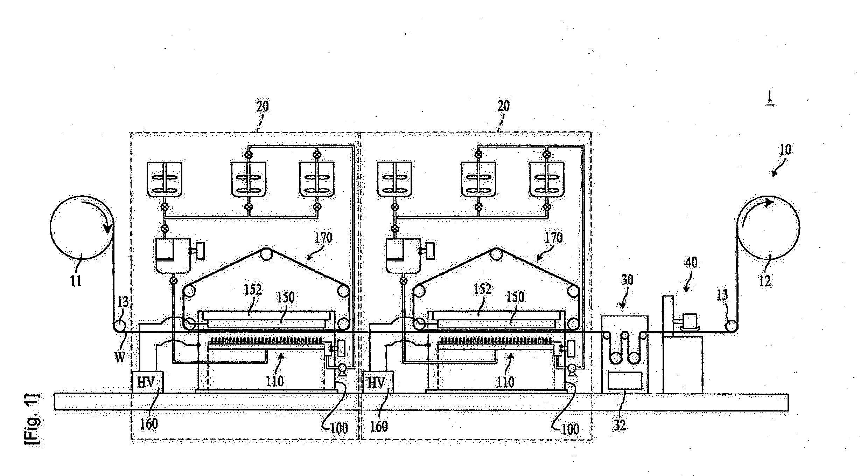

FIG. 1 is a front view of a nano-fiber manufacturing apparatus according to a first preferred embodiment of the present invention.

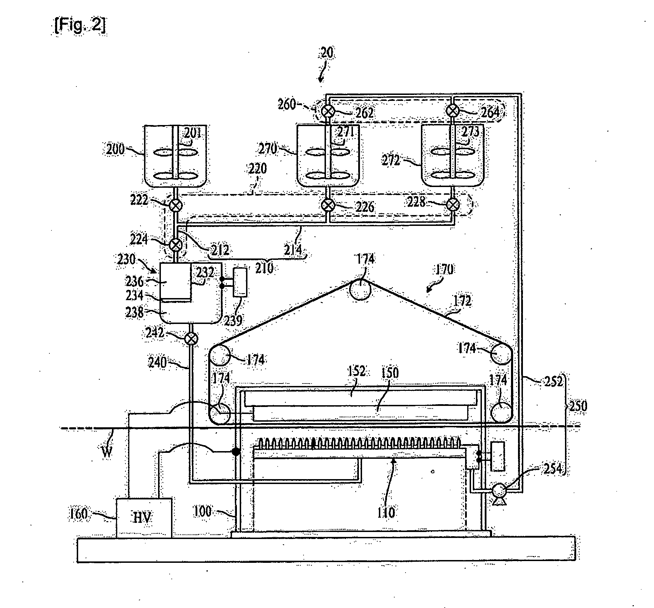

FIG. 2 is a front view of a field emission device according to the first preferred embodiment of the present invention. In FIGS. 1 and 2, a case 100, a nozzle block 110, a raw material tank 200, a middle tank 230, and regeneration tanks 270 and 272 are illustrated in a sectional view.

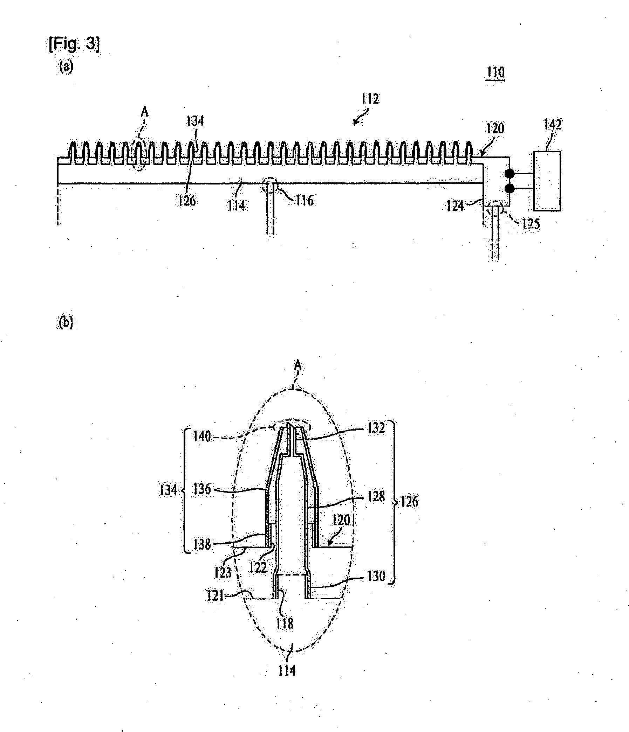

FIG. 3 is a view showing a nozzle block according to the first preferred embodiment of the present invention, wherein FIG. 3(a) is a sectional view of the nozzle block, and FIG. 3(b) is an enlarged view of the A part of FIG. 3(a).

The drawings are mimetic diagrams, and sizes of the components may be not exactly realistic.

### 1. Structure of the nano-fiber manufacturing apparatus 1 according to the first preferred embodiment

As shown in FIG. 1, the nano-fiber manufacturing apparatus 1 according to the first preferred embodiment includes: a transfer device 10 for transferring a long sheet (W) at a predetermined transfer speed; a field emission device 20 for laminating nano-fibers on the long sheet (W) transferred by the transfer device 10; a heater 30 for heating the long sheet (W) on which the nano-fibers are laminated; a permeability measuring device 40 for measuring permeability of the long sheet (W) on which the nano-fibers are laminated by the field emission device 20; a transfer speed controller (not shown) for controlling the transfer speed based on the permeability measured by the permeability measuring device 40; a main controller (not shown) for controlling the transfer device 10, the field emission device 20, the heater 30, the permeability measuring device 40, the transfer speed controller, and a VOC processing device, which will be described later; and the VOC processing device (not shown) for burning and removing volatile materials generated when the nano-fibers are laminated on the long sheet (W).

The nano-fiber manufacturing apparatus 1 according to the first preferred embodiment is provided two field emission devices 20 which are arranged in series in a transfer direction of the long sheet (W).

The transfer device 10 includes: an input roller 11 for putting in the long sheet (W); a winding roller 12 for winding the long sheet (W); and an auxiliary roller 13 located between the input roller 11 and the winding roller 12. The input roller 11 and the winding roller 12 are rotatably operated by a driving motor (not shown).

The structure of the field emission device 20 will be described later.

The heater 30 is arranged between the field emission device 20 and the permeability measuring device 40 and heats the long sheet (W) on which the nano-fibers are laminated. The heating temperature is varied according to kinds of the long sheet (W) or the nano-fibers, but for instance, the heater 30 can heat the long sheet (W) at temperature ranging from 50 degrees to 300 degrees.

As the permeability measuring device 40, one of general permeability measuring devices may be used.

Hereinafter, the structure of the field emission device 20 will be described in detail.

As shown in FIG. 2, the field emission device 20 includes a case 100, a nozzle block 110, a collector 150, a power supply 160, an auxiliary belt unit 170, a raw material tank 200, a second transfer device 210, a second transfer controller 220, a middle tank 230, a supply device 240, a supply controller 242, a first transfer device 250, a first transfer controller 260, and regeneration tanks 270 and 272.

The case 100 is made of a conductive material.

As shown in FIG. 3(a), the nozzle block 110 includes a plurality of upward nozzles 126, a polymer solution supply channel 114, a polymer solution collecting channel 120, and a second sensor 142.

The nano-fiber manufacturing apparatus according to the present invention can use nozzle blocks having various sizes and various shapes, but for instance, the nozzle block 110 has a size and a shape which is seen as a rectangle (including a square) having one side of 0.5m to 3m when it is viewed from the top.

As shown in FIG. 3(b), each of the plural upward nozzles 126 includes a nozzle foundation part 130 which is a foundation of the upward nozzle 126, a nozzle middle part 128 which is the middle part of the upward nozzle 126, and a nozzle front end part 132 which is the front end part of the nozzle 126. The upward nozzle 126 includes a threaded portion (its detailed description will be omitted), which is formed at the foundation part of the upward nozzle 126 in correspondence to a threaded portion 118 (which will be described later) of the polymer solution supply channel. The inside of the upward nozzle 126 is hollow, and the hollow inside of the upward nozzle 126 is communicated with a hollow inside of the polymer solution supply channel 114. The upward nozzle 126 upwardly discharges the polymer solution from an outlet. The upward nozzles 126 are made of a conductive material, for instance, copper, stainless steel aluminum, and so on.

The plural upward nozzles 126 are arranged, for instance, at a pitch of 1.5cm to 6.0cm.

The number of the plural upward nozzles 126 is, for instance, 36 (6 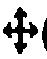 6 in the case that they are arranged with the equal numbers widthwise and lengthwise) to 21904 (148 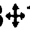 148 in the case that they are arranged widthwise and lengthwise).

The nozzle front end part 132 has a shape cut along a plane obliquely crossing an axis of a cylinder. An angle formed between the axis of the cylinder and the plane is 50 degrees.

The nozzle front end part 132 has an inclined portion formed at the front end side, the front end of the inclined portion is located above the front end of a jacket 134. Moreover, the foundation end of the inclined portion is located below the jacket 134.

The nozzle middle part 128 is formed in an approximately cylindrical shape.

The nozzle foundation part 130 is formed in a hexagonal cylindrical shape.

As shown in FIG. 3(a), the polymer solution supply channel 114 is formed in an approximately rectangular parallelepiped, has a hollow inside, and supplies the polymer solution from the supply device 240 to the plural upward nozzles 126 through the hollow inside. The polymer solution supply channel 114 has a connection part 116 which is connected with the supply device, and is connected with the supply device 240 at the connection part 116. Additionally, the polymer solution supply channel 114 further includes the threaded portion 118. In the nano-fiber manufacturing apparatus 1 according to the present invention, the polymer solution supply channel 114 and the upward nozzles 126 are joined with each other by screw-coupling between the threaded portion 118 of the polymer solution supply channel and the threaded portion of the upward nozzle.

The polymer solution collecting channel 120 includes a receiving portion 121, a recess portion 124, a cover 123, and a plurality of the jackets 134. The polymer solution collecting channel 120 collects the polymer solution overflowed from the outlets of the plural upward nozzles 126.

The receiving portion 121 receives the polymer solution overflowed from the outlets of the plural upward nozzles 126. The receiving portion 121 is arranged above the polymer solution supply channel 114. The receiving portion 121 is somewhat inclined toward the recess portion 124 and serves to guide the received polymer solution toward the recess portion 124.

The recess portion 124 is arranged on the side of the receiving portion 121. The recess portion 124 has a connection portion 125 formed at the bottom to be connected with the first transfer device, and is connected with the first transfer device 250 at the connection portion 125 of the corresponding first transfer device.

The cover 123 covers the receiving portion 121 and has a plurality of nozzle holes respectively communicating with the upward nozzles 126. Moreover, the cover 123 has threaded portions 122 formed around the nozzle holes.

The jackets 134 respectively cover the sides of the upward nozzles 126 protruding from the plural nozzle holes. Each of the jackets 134 includes a jacket foundation portion 138 and a jacket front end portion 140. In the jacket 134, the jacket front end portion 140 has a cylindrical shape with a uniform thickness, and has a shape that the thickness is gradually reduced from the connection portion 136 formed between the jacket front end portion 140 and the jacket foundation portion 138 toward the front end of the jacket 134.

The jacket 134 has the threaded portion formed at the foundation side of the jacket foundation portion 138 in correspondence with the threaded portion 122 of the cover, and its detailed description will be omitted.

In the nano-fiber manufacturing apparatus 1 according to the present invention, the cover 123 and the jacket 134 are joined with each other by screw-coupling between the threaded portion 122 of the cover and the threaded portion of the jacket.

The second sensor 142 measures the surface height of the polymer solution in the polymer solution collecting channel 120. In detail, the second sensor 142 is arranged on the wall surface of the recess portion 124 and measures the surface height of the polymer solution which fills the recess portion 124.

The second sensor 124 is, for instance, an optical fiber sensor.

The collector 150 is arranged above the nozzle block 110. The collector 150 is made of a conductive material, and as shown in FIG. 2, and is attached to the case 100 through an insulation member 152.

The field emission device 20 field-emits nano-fibers by discharging the polymer solution from the outlets of the plural upward nozzles 126 while overflowing the polymer solution from the outlets of the plural upward nozzles 126.

The power supply 160 applies high voltage between the plural upward nozzles 126 and the collector 150. The positive pole of the power supply 160 is connected to the collector 150 and the negative pole of the power supply 160 is connected to the nozzle block 110 through the case 100.

The auxiliary belt unit 170 includes an auxiliary belt 172 rotating in synchronization with the transfer speed of the long sheet (W), and five rollers 174 for the auxiliary belt to help rotation of the auxiliary belt 172. One or two of the five rollers 174 are driving rollers and the remaining rollers are driven rollers. Because the auxiliary belt 172 is arranged between the collector 150 and the long sheet (W), the long sheet (W) is transferred smoothly without being pulled to the collector 150 to which the high voltage of the positive pole is applied.

The raw material tank 200 stores the polymer solution which is a raw material of nano-fibers. The raw material tank 200 includes a stirrer 201 mounted therein for preventing separation or coagulation of the polymer solution. A pipe 212 of the second transfer device 210 is connected to the raw material tank 200.

The second transfer device 210 transfers the polymer solution from the raw material tank 200 or the regeneration tanks 270 and 272 to the middle tank 230. The second transfer device 210 includes the pipe 212 for connecting the raw material tank 200 with the middle tank 230, and a pipe 214 for connecting the regeneration tanks 270 and 272 with the middle tank 230. Moreover, the front end of the pipe 212 is connected to a first storage part 236 (which will be described later) and the rear end of the pipe 214 is connected to the pipe 212.

The second transfer controller 220 controls the transfer operation of the second transfer device 210. The second transfer controller 220 has valves 222, 224, 226 and 228.

The valve 222 controls the transfer of the polymer solution from the raw material tank 200.

The valve 224 controls an amount of the polymer solution introduced from the raw material tank 200 and the regeneration tanks 270 and 272 to the middle tank 230. The control by the valve 224 is achieved according to the surface height measured by the first sensor 239, which will be described later.

The valve 226 controls the transfer of the polymer solution from the regeneration tank 270.

The valve 228 controls the transfer of the polymer solution from the regeneration tank 272.

The second transfer controller 220 controls that the polymer solution is transferred from which one of the raw material tank 200 and the regeneration tanks 270 and 272 to the middle tank 230 by the valves 222, 224, 226 and 228. Furthermore, the second transfer controllers 220 control the transfer operation of the second transfer device 210 according to the surface height, which is measured by the first sensor 239, by the valve 224. Additionally, in the case that the polymer solution is transferred from the regeneration tanks 270 and 272 to the middle tank 230 by the valves 226 and 228, the second transfer controller 220 controls that the polymer solution is transferred from which one of the regeneration tanks 270 and 272.

The middle tank 230 stores the polymer solution supplied from the raw material tank 200 or the regeneration tanks 270 and 272. The middle tank 230 is arranged in such a way that the bottom of the middle tank 230 is located above the top of each upward nozzle 126.

The middle tank 230 includes a partition wall 232, a bubble removal filter 234, and the first sensor 239.

The partition wall 232 covers a portion where the polymer solution is supplied.

The bubble removal filter 234 is arranged at the bottom of the partition wall 232 and removes bubbles from the polymer solution passing through the filter 234. The bubble removal filter 234 has a net-shaped structure having meshes of, for instance, about 0.1mm.

The middle tank 230 includes a first storage part 236 for storing the polymer solution before bubbles are removed by the bubble removal filter 234 and a second storage part 238 for storing the polymer solution after the bubbles are removed by the bubble removal filter 234.

The second storage part 238 is connected with the polymer solution supply channel 114 by the supply device 240, and hence, the polymer solution stored in the second storage part 238 is supplied to the polymer solution supply channel 114 of the nozzle block 110.

The first sensor 239 measures the surface height of the polymer solution in the second storage part 238. The first sensor is, for instance, an optical fiber sensor.

The supply device 240 has one pipe and supplies the polymer solution stored in the second storage part 238 of the middle tank 230 to the polymer solution supply channel 114 of the nozzle block 110. Additionally, it is preferable that at least one supply device is provided in relation with one nozzle block.

The supply controller 242 includes the one pipe mounted on the supply device 240 and controls the supply operation of the supply device 240.

The first transfer device 250 has a pipe 252 and a pump 254, and transfers the polymer solution from the polymer solution collecting channel 120 of the nozzle block 110 to the regeneration tanks 270 and 272.

The pump 254 generates a driving power to transfer the polymer solution to the regeneration tanks 270 and 272 which are located above the nozzle block 110.

The first transfer controller 260 controls the transfer operation of the first transfer device 250. The first transfer controller 260 includes valves 262 and 264, and a controller (not shown) of the pump 254.

The valve 262 controls the transfer of the polymer solution from the polymer solution collecting channel to the regeneration tank 270.

The valve 264 controls the transfer of the polymer solution from the polymer solution collecting channel to the regeneration tank 272.

The first transfer controller 260 controls that the polymer solution is transferred to which one of the regeneration tanks 270 and 272.

Moreover, the first transfer controller 260 controls the transfer operation of the first transfer device 250 according to the surface height of the polymer solution, which is measured by the second sensor 142, by the valves 264 and 266 and the controller of the pump 254.

The plural regeneration tanks 270 and 272 are tanks for regenerating the collected polymer solution, and store the regenerated polymer solution. The regeneration tanks 270 and 272 respectively have stirrers 271 and 273 for preventing separation or coagulation of the polymer solution.

According to the above structure, the nano-fiber manufacturing apparatus 1 according to the first preferred embodiment can collect the polymer solution overflowed from the outlets of the plural upward nozzles and reuse the collected polymer solution as a raw material of nano-fibers.

### 2. Nano-fiber manufacturing method using the nano-fiber manufacturing apparatus 1 according to the first preferred embodiment

The nano-fiber manufacturing method according to the first preferred embodiment includes the steps of field-emitting nano-fibers by discharging the polymer solution from the outlets of the plural upward nozzles 126 while overflowing the polymer solution from the outlets of the plural upward nozzles 126, and collecting the polymer solution overflowed from the outlets of the upward nozzles 126 so as to reuse the collected polymer solution as the raw material of nano-fibers.

First, the polymer solution is transferred from the raw material tank 200 to the middle tank 230 by the pipe 212 of the second transfer device 210. Next, the polymer solution transferred from the first storage part 232 to the second storage part 234 through the bubble removal filter 234 in the middle tank 230 is supplied to the polymer solution supply channel 114 through the supply device 240. The nano-fiber manufacturing apparatus 1 field-emits nano-fibers by discharging the polymer solution from the outlets of the plural upward nozzles 126 while overflowing the polymer solution from the outlets of the plural upward nozzles 126.

Moreover, the nano-fiber manufacturing apparatus 1 collects the overflowed polymer solution in the polymer solution collecting channel 120. At the portion where the polymer solution is collected in the recess portion 124 to some degree, the polymer solution is transferred and collected to the regeneration tank 270 using the first transfer device 250.

After the polymer solution of a predetermined amount is collected in the regeneration tank 270, the place to which the polymer solution is transferred by the first transfer device 250 is changed to the regeneration tank 272 by the first transfer controller 260. Therefore, the overflowed polymer solution is collected to the regeneration tank 272, and hence, the overflowed polymer solution does not enter the regeneration tank 270 while a post process is carried out in the regeneration tank 270.

Continuously, the content of the solvent and additives contained in the collected polymer solution is measured. The measurement may be carried out by extracting some of the polymer solution from the regeneration tank 270 as a sample and analyzing the sample. Analysis of the polymer solution may be carried out by one of the well-known methods.

Next, based on the measurement results, necessary amounts of the solvent and additives are added to the polymer solution. Accordingly, the collected polymer solution is regenerated. After that, the polymer solution inside the regeneration tank 270 is transferred from the raw material tank 200 to the middle tank 230 using the pipe 212 of the second transfer device 210. In lieu of or together with the polymer materials of the raw material tank 200, the polymer solution inside the regeneration tank 270 is used to do field-emission, so that the polymer solution inside the regeneration tank 270 can be reused as the raw material of nano-fibers.

Furthermore, after the polymer solution of the predetermined amount is collected in the regeneration tank 272, in the same way as the steps carried out after the polymer solution of the predetermined amount is collected in the regeneration tank 270, the polymer solution inside the regeneration tank 272 can be reused as the raw material of nano-fibers.

Hereinafter, emission conditions in the nano-fiber manufacturing method according to the first preferred embodiment will be described exemplarily.

The long sheet may be made of one of various materials, such as non-woven fabrics, textiles, and knitted goods. The long sheet may be, for instance, 5um to 500um in thickness, and 10m to 10km in length.

Polymer which is the raw material of nano-fibers may be, for example, polylactic acid (PLA), polypropylene (PP), polyvinyl acetate (PVAc), polyethylene terephthalate (PET), polybutylene terephthalate (PBT), Polyethylene naphthalate (PEN), polyamide (PA), polyurethane (PUR), polyvinyl alcohol (PVA), polyacrylonitrile (PAN), polyetherimide (PEI), Polycaprolactone (PCL), polylactic-co-glycolic acid (PLGA), silk, cellulose, chitosan, and so on.

The solvent used in the polymer solution may be, for example, dichloromethane, dimethyl formamide, dimethyl sulfoxide, methyl ethyl ketone, chloroform, acetone, water, formic acid, acetate, cyclohexane, THF, and so on. Alternatively, solvents of various kinds may be mixed. It is possible to add conductive improvers to the polymer solution.

Permeability of the manufactured nano-fiber non-woven fabric may be, for instance, 0.15cm³/cm²/s~20015cm³/cm². The transfer speed may be, for instance, 0.2m/minute to 100m/minute. Electric voltage applied to the nozzle block 110 and the collector 150 may be 10kV to 80kV, and preferably, 50kV.

Temperature of the emission zone may be, for instance, 25°C, and humidity may be, for instance, 30%.

### 3. Effects of the nano-fiber manufacturing apparatus 1 and the nano-fiber manufacturing method according to the first preferred embodiment

The nano-fiber manufacturing apparatus 1 according to the first preferred embodiment, like the conventional nano-fiber manufacturing apparatus, discharges the polymer solution from the outlets of the plural upward nozzles and field-emits nano-fibers, and hence, it does not cause the droplet phenomenon of the conventional nano-fiber manufacturing apparatuses using downward nozzles and can manufacture nano-fibers of high quality.

Moreover, the nano-fiber manufacturing apparatus 1 according to the first preferred embodiment, like the conventional nano-fiber manufacturing apparatus, field-emits nano-fibers while overflowing the polymer solution from the outlets of the plural upward nozzles, and hence, can always supply a sufficient amount of the polymer solution to the upward nozzles and manufacture nano-fibers of uniform quality.

Furthermore, the nano-fiber manufacturing apparatus 1 according to the first preferred embodiment, like the conventional nano-fiber manufacturing apparatus, collects the polymer solution overflowed from the outlets of the plural upward nozzles and reuses the overflowed polymer solution as a raw material of the nano-fibers, and hence, it can reduce costs of materials so as to manufacture nano-fibers at a low price. Additionally, it follows the resource saving flow.

Additionally, the nano-fiber manufacturing apparatus 1 according to the first preferred embodiment transfers the collected polymer solution to the regeneration tank, measures the composition of the corresponding polymer solution, and adds necessary materials besides the solution into the polymer solution according to the measured results, so that the nano-fiber manufacturing apparatus can regenerate the polymer solution which has the same composition as the original polymer solution or which is very similar in composition to the original polymer solution. Therefore, the nano-fiber manufacturing apparatus 1 according to the first preferred embodiment can collect and reuse the overflowed polymer solution as a raw material of nano-fibers, uniformly keep the emission conditions (in this case, the composition of the polymer solution) for a long time during the field emission process, and mass-produce nano-fibers with uniform quality.

As a result, the nano-fiber manufacturing apparatus according to the first preferred embodiment can mass-produce nano-fibers with uniform quality at a low manufacturing cost.

In the nano-fiber manufacturing apparatus according to the first preferred embodiment, because the second transfer controller 220 controls that the polymer solution is transferred from which one of the raw material tank 200 and the regeneration tanks 270 and 272 to the middle tank 230, the nano-fiber manufacturing apparatus can properly control a supply source of the polymer solution transferred to the middle tank according to the amount of the polymer solution stored in the regeneration tank.

Moreover, in the nano-fiber manufacturing apparatus according to the first preferred embodiment, because the first transfer controller 260 controls that the polymer solution is transferred to which one of the plural regeneration tanks 270 and 272 and the second transfer controller 220 controls that the polymer solution is transferred from which one of plural regeneration tanks 270 and 272 to the middle tank 230 when the polymer solution is transferred from the regeneration tanks 270 and 272 to the middle tank 230, the nano-fiber manufacturing apparatus uses a plurality of the regeneration tanks 270 and 272 in order (by turns) so as to carry out regeneration of the collected polymer solution without a stop.

Furthermore, in the nano-fiber manufacturing apparatus according to the first preferred embodiment, the middle tank 230 includes: the partition wall 232 covering the portion where the polymer solution is supplied; the bubble removal filter 234 arranged at the bottom of the partition wall 232; a first storage part 236 for storing the polymer solution before bubbles are removed by the bubble removal filter 234; and the second storage part 238 for storing the polymer solution after the bubbles are removed by the bubble removal filter 234, and the polymer solution stored in the second storage part 238 is supplied to the polymer solution supply channel 114 of the nozzle block 110. Accordingly, the nano-fiber manufacturing apparatus can manufacture nano-fibers of more uniform quality because the polymer solution from which bubbles are removed by the bubble removal filter is always supplied to the upward nozzles.

Additionally, in the nano-fiber manufacturing apparatus according to the first preferred embodiment, the middle tank 230 includes the first sensor 239 for measuring the surface height of the polymer solution in the second storage part 238, and the second transfer controller 220 controls the transfer operation of the second transfer device 210 according to the surface height measured by the first sensor 239. Therefore, the nano-fiber manufacturing apparatus can always supply the polymer solution to the upward nozzles at a predetermined pressure in stability without regard to the amount of the polymer solution stored in the raw material tank and the regeneration tank.

In addition, in the nano-fiber manufacturing apparatus according to the first preferred embodiment, the nozzle block 110 includes the second sensor 142 for measuring the surface height of the polymer solution in the polymer solution collecting channel 120, and the first transfer controller 260 controls the transfer operation of the first transfer device 250 according to the surface height measured by the second sensor 142. Therefore, the nano-fiber manufacturing apparatus can effectively transfer the polymer solution to the regeneration tank because it can transfer the corresponding polymer solution to the regeneration tank at the place where the polymer solution is collected in the polymer solution collecting channel to some degree.

Moreover, in the nano-fiber manufacturing apparatus according to the first preferred embodiment, the polymer solution collecting channel 120 includes: the receiving portion 121 for receiving the polymer solution overflowed from the outlets of the upward nozzles 126; the cover 123 covering the receiving portion 121 and having a plurality of nozzle holes respectively communicating with the upward nozzles 126; and a plurality of the jackets 134 for covering sides of the upward nozzles 126 protruding from the nozzle holes. Therefore, the nano-fiber manufacturing apparatus can prevent scattering of the overflowed polymer solution and effectively collect the corresponding polymer solution by the operation of jackets. Moreover, the nano-fiber manufacturing apparatus can prevent volatilization of the solvent from the polymer solution by the operation of a cover.

Furthermore, the nano-fiber manufacturing apparatus according to the first preferred embodiment can stably supply the polymer solution to the upward nozzles using gravity, because the bottom of the middle tank 230 is located above the top of the upward nozzles 126.

Additionally, the nano-fiber manufacturing apparatus according to the first preferred embodiment can mass-produce nano-fibers with higher productivity, because another transfer device 10 for transferring the long sheet (W) is additionally provided and a plurality of the field emission devices 20 are arranged in series in the transfer direction of the long sheet (W). Furthermore, the nano-fiber manufacturing apparatus can mass-produce products which are formed by laminating the nano-fibers thick or which are formed by laminating nano-fibers of various kinds.

Moreover, the nano-fiber manufacturing method according to the first preferred embodiment, like the nano-fiber manufacturing apparatus according to the first preferred embodiment, can mass-produce nano-fibers with uniform quality at a low manufacturing cost.

### [Experiment Example]

The nano-fiber manufacturing apparatus 1 according to the preferred embodiment of the present invention field-emitted nano-fibers by discharging the polymer solution from the outlets of the plural upward nozzles 126 while overflowing the polymer solution from the outlets of the plural upward nozzles 126, and at the same time, collected the polymer solution overflowed from the outlets of the upward nozzles 126, and reused the collected polymer solution as the raw material of nano-fibers. In detail, the nano-fiber manufacturing apparatus 1 measured the composition of the corresponding polymer solution after transferring the collected polymer solution to the regeneration tanks 270 and 272, and at the same time, added solvent and other necessary materials into the polymer solution according to the measured result so as to regenerate the polymer solution.

Table 1 shows composition of the polymer solution which becomes the raw material. Table 2 shows composition of the collected polymer solution. Table 3 shows composition of regenerated polymer solution. Furthermore, in the Tables 1 to 3, "relative weight" means relative weight of each material when weight of polyurethane is 100.

**[Table 1]**

| Name of Material | Relative Weight |
|---|---|
| Polyurethane (polymer) | 100.0 |
| Dimethylformamide | 240.0 |
| Dimethyl ethyl ketone (solvent) | 160.0 |

**[Table 2]**

| Name of Material | Relative Weight |
|---|---|
| Polyurethane (polymer) | 100.0 |
| Dimethylformamide | 199.2 |
| Dimethyl ethyl ketone (solvent) | 85.4 |

**[Table 3]**

| Name of Material | Relative Weight |
|---|---|
| Polyurethane (polymer) | 100.0 |
| Dimethylformamide | 240.0 |
| Dimethyl ethyl ketone (solvent) | 160.0 |

As shown in Tables 1 to 3, the nano-fiber manufacturing apparatus 1 according to the present invention regenerated the corresponding polymer solution into a polymer solution which had the same composition as the original polymer solution or which was very similar in composition to the original polymer solution.

Furthermore, the nano-fiber manufacturing apparatus 1 according to the present invention regenerated the polymer solution by adding 40.8g of dimethylformamide and 74.6g of methyl ethyl ketone per 100g of polyurethane into the collected polymer solution.

### [Embodiment 2]

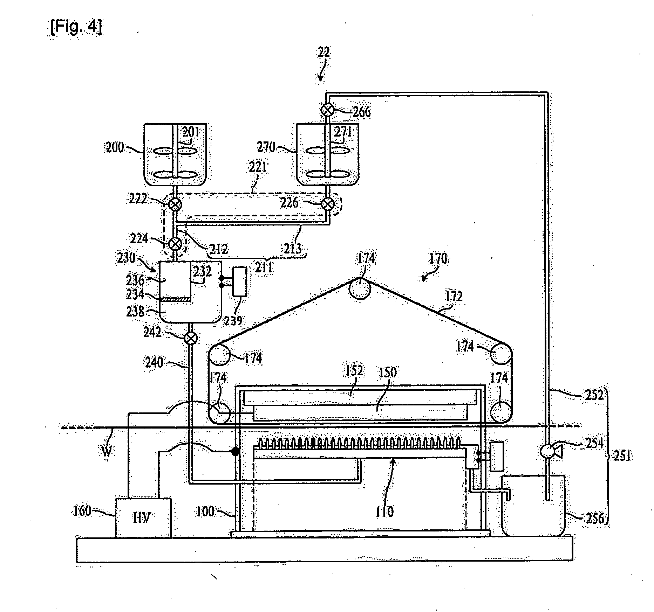

FIG. 4 is a front view of a field emission device according to a second preferred embodiment of the present invention. Moreover, in FIG. 4, a nozzle block 110, a raw material tank 200, a middle tank 230, a regeneration tank 270, and a storage tank are illustrated in a sectional view.

The nano-fiber manufacturing apparatus according to the second preferred embodiment (not designated by a reference numeral in drawings) is basically identical in structure with the nano-fiber manufacturing apparatus 1 according to the first preferred embodiment, but is different in the number of the regeneration tanks and the structure of the first transfer device from the nano-fiber manufacturing apparatus according to the first preferred embodiment. Furthermore, the nano-fiber manufacturing apparatus according to the second preferred embodiment is different in the structures of the first transfer controller, the second transfer device and the second transfer controller from the nano-fiber manufacturing apparatus according to the first preferred embodiment. Hereinafter, the nano-fiber manufacturing apparatus according to the second preferred embodiment will be described, but has the same reference numerals as that of the first preferred embodiment because it is basically identical in structure with that of the first preferred embodiment.

As shown in FIG. 4, the nano-fiber manufacturing apparatus according to the second preferred embodiment includes one regeneration tank 270 in relation with one field emission device 22. Furthermore, a first transfer device 251 has the storage tank 256 arranged between a polymer solution collecting channel (no reference numeral in the drawing) of the nozzle block 110 and a pump 252. The storage tank 256 serves to temporarily store the overflowed solution while the polymer solution is regenerated in the regeneration tank 270.

A first transfer controller 266 includes one valve and a controller (not shown) of the pump 254, and controls the transfer operation of a first transfer device 251.

A second transfer device 211 transfers the polymer solution from the raw material tank 200 or the regeneration tank 270 to the middle tank 230. The second transfer device 211 has a pipe 212 for connecting the raw material tank 200 with the middle tank 230 and a pipe 213 for connecting the regeneration tank 270 with the middle tank 230.

The second transfer controller 221 controls the transfer operation of the second transfer device 211. The second transfer controller 221 has valves 222, 224 and 226.

As described above, because the nano-fiber manufacturing apparatus according to the second preferred embodiment is different in the number of the regeneration tanks and the structure of the first transfer device from the nano-fiber manufacturing apparatus according to the first preferred embodiment but has the above-mentioned structure, like the nano-fiber manufacturing apparatus 1 according to the first preferred embodiment, the nano-fiber manufacturing apparatus according to the second preferred embodiment can regenerate the polymer solution which has the same composition as the original polymer solution or which is very similar in composition to the original polymer solution by transferring the collected polymer solution to the regeneration tank 270, measuring the composition of the corresponding polymer solution, and adding the solvent and other necessary materials into the polymer solution according to the measured result. Therefore, the nano-fiber manufacturing apparatus according to the second preferred embodiment can collect and reuse the overflowed polymer solution as a raw material of nano-fibers, uniformly keep the emission conditions (in this case, the composition of the polymer solution) for a long time during the field emission process, and mass-produce nano-fibers with uniform quality. As a result, the nano-fiber manufacturing apparatus according to the second preferred embodiment can mass-produce nano-fibers with uniform quality at a low manufacturing cost.

Moreover, the nano-fiber manufacturing apparatus according to the second preferred embodiment has the same effects as the nano-fiber manufacturing apparatus 1 according to the first preferred embodiment because it has the same structure as the nano-fiber manufacturing apparatus 1 according to the first preferred embodiment except the number of the regeneration tanks and the structure of the first transfer device.

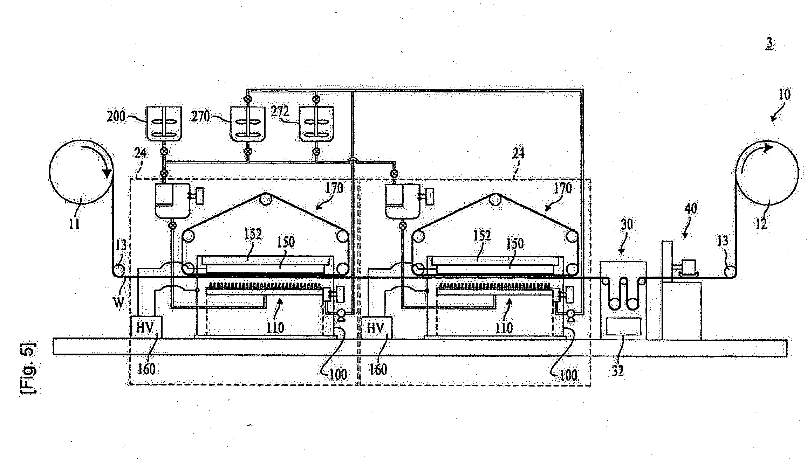

FIG. 5 is a front view of a nano-fiber manufacturing apparatus 3 according to a third preferred embodiment of the present invention. In FIG. 5, a nozzle block 110, a raw material tank 200, a middle tank 230 (not designated by a reference numeral in the drawing), a regeneration tank 270, and a storage tank 280 are illustrated in a sectional view.

The nano-fiber manufacturing apparatus 3 according to the third preferred embodiment is basically identical in structure with the nano-fiber manufacturing apparatus 1 according to the first preferred embodiment, but is different from the nano-fiber manufacturing apparatus 1 according to the first preferred embodiment in that the raw material tank and the regeneration tanks are located out of the field emission device. That is, as shown in FIG. 5, in the nano-fiber manufacturing apparatus 3 according to the third preferred embodiment, the raw material tank 200 and the regeneration tanks 270 and 272 are located out of the field emission device 24, and two field emission devices 24 share the one raw material tank 200 and the two regeneration tanks 270 and 272.

As described above, because the nano-fiber manufacturing apparatus 3 according to the third preferred embodiment is different from the nano-fiber manufacturing apparatus 1 according to the first preferred embodiment in that the raw material tank and the regeneration tanks are located out of the field emission device but has the above-mentioned structure, like the nano-fiber manufacturing apparatus 1 according to the first preferred embodiment, the nano-fiber manufacturing apparatus 3 according to the third preferred embodiment can regenerate the polymer solution which has the same composition as the original polymer solution or which is very similar in composition to the original polymer solution by transferring the collected polymer solution to the regeneration tank 270, measuring the composition of the corresponding polymer solution, and adding the solvent and other necessary materials into the polymer solution according to the measured result. Therefore, the nano-fiber manufacturing apparatus 3 according to the third preferred embodiment can collect and reuse the overflowed polymer solution as a raw material of nano-fibers, uniformly keep the emission conditions (in this case, the composition of the polymer solution) for a long time during the field emission process, and mass-produce nano-fibers with uniform quality. As a result, the nano-fiber manufacturing apparatus 3 according to the third preferred embodiment can mass-produce nano-fibers with uniform quality at a low manufacturing cost.

Moreover, the nano-fiber manufacturing apparatus 3 according to the third preferred embodiment has the same effects as the nano-fiber manufacturing apparatus 1 according to the first preferred embodiment because it has the same structure as the nano-fiber manufacturing apparatus 1 according to the first preferred embodiment except that the raw material tank and the regeneration tanks are located out of the field emission device.

While the present invention is described based on the example embodiments, the present invention is not restricted to the above-mentioned embodiments. It would be understood that various changes and modifications in form may be made therein without departing from the scope of the present invention. For instance, the following modifications may be made.
(1) The number, positions and sizes of the components in the preferred embodiments are exemplary, and the present invention is not restricted to the above.
(2) In the second preferred embodiment, the nano-fiber manufacturing apparatus uses the field emission device 22 having the storage tank 256 in the first transfer device 251, but the present invention is not restricted to the above. For instance, the present invention may be applied to the nano-fiber manufacturing apparatus including the field emission device having the storage tank at another place (for instance, at the rear end of the regeneration tank). Alternatively, the present invention may be applied to the nano-fiber manufacturing apparatus including the field emission device, which has the polymer solution collecting means having a capacity sufficient to store the polymer solution and does not have the storage tank.
(3) In the preferred embodiments, the bottom of the middle tank 230 is arranged above the top of the upward nozzles 126, but the present invention is not restricted to the above. For instance, the bottom of the middle tank 230 may be located below the top of the upward nozzles. In this case, it is preferable that a measuring pump for supplying the polymer solution stored in the middle tank to the polymer solution supply channel of the nozzle block is arranged between the middle tank and the nozzle block. Through the above structure, the nano-fiber manufacturing apparatus can always supply the polymer solution to the nozzles in stability at a wanted pressure using the measuring pump.
(4) In the preferred embodiments, the nano-fiber manufacturing apparatus uses the second transfer device in which an end of the pipe connected with the regeneration tank is connected to the pipe 212, but the present invention is not restricted to the above. The nano-fiber manufacturing apparatus may use a second transfer device in which an end of the pipe connected with the regeneration tank is connected to the first storage part.
(5) In the preferred embodiments, the nano-fiber manufacturing method according to the first preferred embodiment is carried out using the nano-fiber manufacturing apparatus 1 according to the first preferred embodiment, but the present invention is not restricted to the above. The nano-fiber manufacturing method may be carried out using one of nano-fiber manufacturing apparatuses of various kinds including a plurality of upward nozzles and regeneration tanks.
(6) In the preferred embodiments, the nano-fiber manufacturing method according to the present invention is described using the nano-fiber manufacturing apparatus including two field emission devices, but the present invention is not restricted to the above. For instance, the present invention may be applied to nano-fiber manufacturing apparatuses including at least one field emission device.
(7) In the preferred embodiments, the nano-fiber manufacturing apparatus is described using the field emission device that the positive pole of the power supply 160 is connected to the collector 150 and the negative pole of the power supply 160 is connected to the nozzle block 110, but the present invention is not restricted to the above. For instance, the present invention may be applied to a nano-fiber manufacturing apparatus including field emission devices.
(8) In the preferred embodiments, the nano-fiber manufacturing apparatus includes the polymer solution collecting channel 120, which has the nozzle front end part 132 having the shape cut along a plane obliquely crossing an axis of the cylinder and a plurality of jackets 134 for covering the sides of the upward nozzles 126, but the present invention is not restricted to the above. For instance, the nano-fiber manufacturing apparatus may include upward nozzles having nozzle front end parts with a shape cut along a plane horizontally crossing the axis of the cylinder, or include a polymer solution collecting channel which does not have the jackets, or include both of the upward nozzles and the polymer solution collecting channel.
(9) In the preferred embodiments, the present invention is described using the nano-fiber manufacturing apparatus in which one nozzle block is arranged in one field emission device, but is not restricted to the above. For instance, two or more nozzle blocks may be arranged in one field emission device.
   In this case, the nozzles may be arranged at the same pitch in all nozzle blocks or at different pitches in each nozzle block. Additionally, the nozzles may be located at the same height in all nozzle blocks or at different heights in each nozzle block.
(10) The nano-fiber manufacturing apparatus according to the present invention may further include a device for reciprocating the nozzle block on a predetermined reciprocating motion cycle in a width direction of the long sheet. The nano-fiber manufacturing apparatus according to the present invention can uniformize the laminated amount of polymer fibers in the width direction of the long sheet by carrying out field-emission while reciprocating the nozzle block on the predetermined reciprocating motion cycle using the above device. In this case, the reciprocating motion cycle or the reciprocation distance of the nozzle block may be independently controlled in each field-emission device or in each nozzle block. Therefore, all nozzle blocks can be reciprocated on the same cycle or reciprocated on different cycles. Furthermore, the reciprocation distance of all nozzle blocks may be the same or may be different.

## Claims

1. A nano-fiber manufacturing apparatus, which includes: a nozzle block having a plurality of upward nozzles for upwardly discharging a polymer solution from outlets of the upward nozzles and a polymer solution supply channel for supplying the polymer solution to the upward nozzles; a collector arranged above the nozzle block; and a power supply for applying high voltage between the upward nozzles and the collector, and which is capable of field-emitting nano-fibers by discharging the polymer solution from the outlets of the plural upward nozzles while overflowing the polymer solution from the outlets of the plural upward nozzles, and at the same time, collecting the polymer solution overflowed from the outlets of the upward nozzles so as to the collected polymer solution as a raw material of nano-fibers, the nano-fiber manufacturing apparatus comprising:
a polymer solution collecting channel formed in the nozzle block for collecting the polymer solution overflowed from the outlets of the upward nozzles;
a raw material tank for storing the polymer solution which becomes the raw material of the nano-fibers;
regeneration tanks adapted for regenerating the collected polymer solution and for storing the regenerated polymer solution;
a middle tank for storing the polymer solution supplied from the raw material tank or the regeneration tank;
a first transfer device for transferring the polymer solution from the polymer solution collecting channel of the nozzle block to the regeneration tank;
a first transfer controller for controlling a transfer operation of the first transfer device;
a second transfer device for transferring the polymer solution from the raw material tank and the regeneration tank to the middle tank; and
a second transfer controller for controlling a transfer operation of the second transfer device.

2. The nano-fiber manufacturing apparatus according to claim 1, wherein the second transfer controller controls that the polymer solution is transferred from which one of the raw material tank and the regeneration tank to the middle tank.

3. The nano-fiber manufacturing apparatus according to claim 2, wherein a plurality of the regeneration tanks are provided, and
wherein the first transfer controller controls that the polymer solution is transferred from which one of the regeneration tanks to the middle tank, and in the case that the polymer solution is transferred from the regeneration tank to the middle tank, the second transfer controller controls that the polymer solution is transferred from which one of the regeneration tanks to the middle tank.

4. The nano-fiber manufacturing apparatus according any one of claims 1 to 3, wherein the middle tank comprises:
a partition wall for covering a portion where the polymer solution is supplied;
a bubble removal filter arranged at the bottom of the partition wall;
a first storage part for storing the polymer solution before bubbles are removed by the bubble removal filter; and
a second storage part for storing the polymer solution after the bubbles are removed by the bubble removal filter, and wherein the polymer solution stored in the second storage part is supplied to the polymer solution supply channel of the nozzle block.

5. The nano-fiber manufacturing apparatus according to claim 4, wherein the middle tank comprises a first sensor for measuring a surface height of the polymer solution in the second storage part, and the second transfer controller controls a transfer operation of the second transfer device according to the surface height measured by the first sensor.

6. The nano-fiber manufacturing apparatus according any one of claims 1 to 5, wherein the nozzle block comprises a second sensor for measuring a surface height of the polymer solution in the polymer solution collecting channel, and the first transfer controller controls a transfer operation of the first transfer device according to the surface height measured by the second sensor.

7. The nano-fiber manufacturing apparatus according any one of claims 1 to 6, wherein the polymer solution collecting channel comprises:
a receiving portion for receiving the polymer solution overflowed from the outlets of the upward nozzles;
a cover covering the receiving portion and having a plurality of nozzle holes respectively communicating with the upward nozzles; and
a plurality of jackets for covering sides of the upward nozzles protruding from the nozzle holes.

8. The nano-fiber manufacturing apparatus according any one of claims 1 to 7, wherein the bottom of the middle tank is located above the top of the upward nozzles.

9. The nano-fiber manufacturing apparatus according any one of claims 1 to 7, wherein a measuring pump is arranged between the middle tank and the nozzle block for supplying the polymer solution stored in the middle tank to the polymer solution supply channel of the nozzle block.

10. The nano-fiber manufacturing apparatus according any one of claims 1 to 9, wherein the field emission device further comprises another transfer device for transferring a long sheet, and essentially comprises the nozzle block and the collector in order to laminate nano-fibers on the surface of the long sheet, and wherein a plurality of the field emission devices are arranged in series in a transfer direction of the long sheet.

11. A nano-fiber manufacturing method, which includes the steps of field-emitting nano-fibers by discharging a polymer solution from outlets of plural upward nozzles while overflowing the polymer solution from the outlets of the plural upward nozzles, and collecting the polymer solution overflowed from the outlets of the upward nozzles so as to reuse the collected polymer solution as the raw material of nano-fibers, the nano-fiber manufacturing method comprising the steps of:
collecting the polymer solution overflowed from the outlets of the plural upward nozzles to a regeneration tank;
measuring the content of a solvent in the collected polymer solution;
adding the solvent of a necessary amount into the polymer solution on the basis of the measured result, so that the polymer solution can be reused as a raw material of nano-fibers.

## Patentansprüche

1. Eine Nanofaser herstellende Apparatur, die enthält: einen Düsenblock mit einer Vielzahl an nach oben gerichteten Düsen um eine Polymerlösung aufwärts aus Ventilen der nach oben gerichteten Düsen herauszuspritzen und eine Polymerlösung-Versorgungsleitung um die nach oben gerichteten Düsen mit Polymerlösung zu versorgen; einen Kollektor über dem Düsenblock angebracht; und eine Stromversorgung, um eine Hochspannung zwischen den nach oben gerichteten Düsen und dem Kollektor anzulegen, und imstande ist, Feld-emittierende Nanofasern durch Herausspritzen der Polymerlösung aus den Ventilen der vielen nach oben gerichteten Düsen, während die Polymerlösung aus den Ventilen der vielen nach oben gerichteten Düsen überfliesst, und gleichzeitig Sammeln der Polymerlösung, die aus den Ventilen der nach oben gerichteten Düsen überfliesst, um die gesammelte Polymerlösung als Ausgangsmaterial für die Nanofasern zu verwenden, die Nanofaser herstellende Apparatur umfassend:
eine Polymerlösung Sammelleitung, gebildet im Düsenblock um Polymerlösung zu sammeln, die von den Ventilen der nach oben gerichteten Düsen überfliesst;
ein Behälter für Ausgangsmaterial um die Polymerlösung zu lagern, die das Ausgangsmaterial für die Nanofasern bildet;
Regenerationsbehälter, geeignet zur Regeneration der gesammelten Polymerlösung und zur Lagerung der gesammelten Polymerlösung;
ein Zwischenbehälter um die Polymerlösung zu lagern, die durch den Behälter für Ausgangsmaterial oder den Regenerationsbehälter bereitgestellt wird;
ein erstes Übertragungsgerät, zur Übertragung der Polymerlösung aus der Polymerlösung Sammelleitung des Düsenblocks zu dem Regenerationsbehälter;
eine erste Übertragungssteuerung, um den Überführungsvorgang des ersten Übertragungsgerätes zu steuern;
eine zweite Übertragungssteuerung, zur Übertragung der Polymerlösung aus dem Behälter für Ausgangsmaterial und dem Regenerationsbehälter zu dem Zwischenbehälter; und
eine zweite Übertragungssteuerung um den Überführungsvorgang des zweiten Übertragungsgerätes zu steuern.

2. Die Nanofaser herstellende Apparatur gemäß Anspruch 1, wobei die zweite Übertragungssteuerung steuert, dass die Polymerlösung von einem der Behälter für Ausgangsmaterial und dem Regenerationsbehälter zu dem Zwischenbehälter überführt wird.

3. Die Nanofaser herstellende Apparatur, gemäß Anspruch 2, wobei eine Vielzahl der Regenerationsbehälter bereitgestellt werden, und
wobei die erste Übertragungssteuerung steuert, dass die Polymerlösung von einem der Regenerationsbehälter zu dem Zwischenbehälter überführt wird, und im Fall, dass die Polymerlösung aus dem Regenerationsbehälter zu dem Zwischenbehälter überführt wird, die zweite Übertragungssteuerung steuert, dass die Polymerlösung von einem der Regenerationsbehälter zu dem Zwischenbehälter überführt wird.

4. Die Nanofaser herstellende Apparatur gemäß einem der Ansprüche 1 bis 3, wobei der Zwischenbehälter umfasst:
eine Trennwand um einen Bereich abzudecken, in dem die Polymerlösung bereitgestellt wird;
einen Filter zur Entfernung von Blasen, angeordnet am Boden der Trennwand;
einen ersten Speicherbereich, zur Speicherung der Polymerlösung, bevor Blasen durch den Filter zur Entfernung von Blasen entfernt werden; und
einen zweiten Speicherbereich, zur Speicherung der Polymerlösung, nachdem die Blasen durch den Filter zur Entfernung von Blasen entfernt wurden, und wobei die Polymerlösung gespeichert im zweiten Speicherbereich für die Sammelleitung, im Düsenblock bereitgestellt wird.

5. Die Nanofaser herstellende Apparatur gemäß Anspruch 4, wobei der Zwischenbehälter einen ersten Sensor umfasst, um die Oberflächenhöhe der Polymerlösung im zweiten Speicherteil zu messen, und die zweite Übertragungssteuerung einen Überführungsvorgang des zweiten Übertragungsgerätes steuert, gemäß der Oberflächenhöhe gemessen durch den ersten Sensor gemessen.

6. Die Nanofaser herstellende Apparatur gemäß einem der Ansprüche 1 bis 5, wobei der Düsenblock einen zweiten Sensor umfasst, um die Oberflächenhöhe der Polymerlösung in der Sammelleitung für Polymerlösung zu messen, und die erste Übertragungssteuerung einen Überführungsvorgang des ersten Übertragungsgerätes steuert, gemäß der Oberflächenhöhe gemessen durch den zweiten Sensor.

7. Die Nanofaser herstellende Apparatur gemäß einem der Ansprüche 1 bis 6, wobei die Sammelleitung für Polymerlösung umfasst:
einen Aufnahmebereich zur Aufnahme der Polymerlösung, die von den Ventilen der nach oben gerichteten Düsen überfliesst;
eine Abdeckung, abdeckend den Aufnahmebereich und mit einer Vielzahl an Düsenlöchern, jeweils mit den nach oben gerichteten Düsen kommunizierend; und
eine Vielzahl an Hüllen zur Abdeckung der Seiten der nach oben gerichteten Düsen herausstehend aus den Düsenlöchern.

8. Die Nanofaser herstellende Apparatur gemäß einem der Ansprüche 1 bis 7, wobei der Boden des Zwischenbehälters über der Spitze der nach oben gerichteten Düsen angebracht ist.

9. Die Nanofaser herstellende Apparatur gemäß einem der Ansprüche 1 bis 7, wobei eine Messpumpe zwischen dem Zwischenbehälter und dem Düsenblock angebracht ist, um die Sammelleitung für Polymerlösung des Düsenblocks mit der im Zwischenbehälter gespeicherten Polymerlösung zu versorgen.

10. Die Nanofaser herstellende Apparatur gemäß einem der Ansprüche 1 bis 9, wobei das Feldemissionsgerät weiter ein weiteres Übertragungsgerät umfasst, zur Überführung einer langen Platte, und essentiell den Düsenblock umfasst sowie den Kollektor um die Nanofasern auf der langen Platte zu laminieren, und wobei eine Vielzahl der Feldemissionsgeräte in Reihe in einer Übertragungsrichtung der langen Platte angeordnet ist.

11. Eine Nanofaser herstellende Methode, welche die Schritte umfasst, die Feld-emittierenden Nanofasern durch Herausspritzen einer Polymerlösung aus Ventilen der vielen nach oben gerichteten Düsen, während die Polymerlösung aus den Ventilen der vielen nach oben gerichteten Düsen überfliesst, und Sammeln der Polymerlösung, die von den Ventilen der nach oben gerichteten Düsen überfliesst, um die gesammelte Polymerlösung als Ausgangsmaterial für Nanofasern wiederzuverwenden, die Nanofaser herstellende Methode umfassend die Schritte des:
Sammeln der Polymerlösung, die von den Ventilen der vielen nach oben gerichteten Düsen überfliesst, in einem Regenerationsbehälter;
Messen des Inhalts eines Lösungsmittels in der gesammelten Polymerlösung;
Hinzunehmen des Lösungsmittels in einer erforderlichen Menge zu der Polymerlösung auf der Basis des gemessenen Ergebnisses, so dass die Polymerlösung als Ausgangsmaterial für Nanofasern wiederverwendet werden kann.

## Revendications

1. Appareil de fabrication de nanofibres qui inclut : un bloc de buses ayant une pluralité de buses vers le haut pour évacuer vers le haut une solution polymère de sorties des buses vers le haut et un canal de fourniture de solution polymère pour fournir la solution polymère aux buses vers le haut ; un collecteur agencé au-dessus du bloc de buses ; et une alimentation électrique pour appliquer une haute tension entre les buses vers le haut et le collecteur et qui est capable d'émettre par effet de champ des nanofibres en évacuant la solution polymère des sorties de la pluralité de buses vers le haut tout en faisant déborder la solution polymère des sorties de la pluralité de buses vers le haut et, en même temps, recueillant la solution polymère ayant débordé des sorties des buses vers le haut de manière à réutiliser la solution polymère recueillie comme matière brute de nanofibres, l'appareil de fabrication de nanofibres comprenant :
un canal de recueil de solution polymère formé dans le bloc de buses pour recueillir la solution polymère ayant débordé des sorties des buses vers le haut ;
un réservoir à matière brute pour stocker la solution polymère qui devient la matière brute des nanofibres ;
des réservoirs de régénération adaptés à régénérer la solution polymère recueillie et à stocker la solution polymère recueillie ;
un réservoir central pour stocker la solution polymère fournie depuis le réservoir à matière brute ou le réservoir de régénération ;
un premier dispositif de transfert pour transférer la solution polymère du canal de recueil de solution polymère du bloc de buses au réservoir de régénération ;
un premier contrôleur de transfert pour contrôler une opération de transfert du premier dispositif de transfert ;
un second dispositif de transfert pour transférer la solution polymère du réservoir à matière brute et du réservoir de régénération au réservoir central ; et
un second contrôleur de transfert pour contrôler une opération de transfert du second dispositif de transfert.

2. Appareil de fabrication de nanofibres selon la revendication 1, dans lequel le second contrôleur de transfert contrôle que la solution polymère est transférée duquel du réservoir à matière brute et du réservoir de régénération au réservoir central.

3. Appareil de fabrication de nanofibres selon la revendication 2, dans lequel une pluralité de réservoirs de régénération est prévue, et
dans lequel le premier contrôleur de transfert contrôle que la solution polymère est transférée duquel des réservoirs de régénération au réservoir central et, au cas où la solution de polymère est transférée du réservoir de régénération au réservoir central, le second contrôleur de transfert contrôle que la solution polymère est transférée duquel des réservoirs de régénération au réservoir central.

4. Appareil de fabrication de nanofibres selon l'une quelconque des revendications 1 à 3, dans lequel le réservoir central comprend :
une paroi de séparation pour recouvrir une portion où la solution polymère est fournie ;
un filtre d'élimination de bulles agencé au fond de la paroi de séparation ;
une première partie de stockage pour stocker la solution polymère avant l'élimination de bulles par le filtre d'élimination de bulles ; et
une seconde partie de stockage pour stocker la solution polymère après l'élimination des bulles par le filtre d'élimination de bulles, et dans lequel la solution polymère stockée dans la seconde partie de stockage est fournie au canal de fourniture de solution polymère du bloc de buses.

5. Appareil de fabrication de nanofibres selon la revendication 4, dans lequel le réservoir central comprend un premier capteur pour mesurer une hauteur superficielle de la solution polymère dans la seconde partie de stockage et le second contrôleur de transfert contrôle une opération de transfert du second dispositif de transfert en fonction de la hauteur superficielle mesurée par le premier capteur.

6. Appareil de fabrication de nanofibres selon l'une quelconque des revendications 1 à 5, dans lequel le bloc de buses comprend un second capteur pour mesurer une hauteur superficielle de la solution polymère dans le canal de recueil de solution polymère et le premier contrôleur de transfert contrôle une opération de transfert du premier dispositif de transfert en fonction de la hauteur superficielle mesurée par le second capteur.

7. Appareil de fabrication de nanofibres selon l'une quelconque des revendications 1 à 6, dans lequel le canal de recueil de solution polymère comprend :
une portion de réception pour recevoir la solution polymère ayant débordé des sorties des buses vers le haut ;
un recouvrement recouvrant la portion de réception et ayant une pluralité d'orifices de buse communiquant respectivement avec les buses vers le haut ; et
une pluralité de chemises pour recouvrir des côtés des buses vers le haut saillant depuis les orifices de buse.

8. Appareil de fabrication de nanofibres selon l'une quelconque des revendications 1 à 7, dans lequel le fond du réservoir central est situé au-dessus du dessus des buses vers le haut.

9. Appareil de fabrication de nanofibres selon l'une quelconque des revendications 1 à 7, dans lequel une pompe de mesure est agencée entre le réservoir central et le bloc de buses pour fournir la solution polymère stockée dans le réservoir central au canal de fourniture de solution polymère du bloc de buses.

10. Appareil de fabrication de nanofibres selon l'une quelconque des revendications 1 à 9, dans lequel le dispositif à émission par effet de champ comprend en outre un autre dispositif de transfert pour transférer une feuille longue et comprend essentiellement le bloc de buses et le collecteur afin de laminer des nanofibres sur la surface de la feuille longue, et dans lequel une pluralité de dispositifs à émission par effet de champ sont agencés en série dans une direction de transfert de la feuille longue.

11. Procédé de fabrication de nanofibres qui inclut les étapes d'émission par effet de champ de nanofibres en évacuant une solution polymère de sorties d'une pluralité de buses vers le haut tout en faisant déborder la solution polymère des sorties de la pluralité de buses vers le haut et de recueil de la solution polymère ayant débordé des sorties des buses vers le haut de manière à réutiliser la solution polymère recueillie comme matière brute de nanofibres, le procédé de fabrication de nanofibres comprenant les étapes consistant à :
recueillir la solution polymère ayant débordé des sorties de la pluralité de buses vers le haut vers un réservoir de régénération ;
mesurer la teneur d'un solvant dans la solution polymère recueillie ;
ajouter le solvant d'une quantité nécessaire dans la solution polymère sur la base du résultat mesuré de sorte que la solution polymère peut être réutilisée comme matière brute de nanofibres.
